# EUROPÄISCHE PATENTSCHRIFT

(11) **EP 1 051 796 B1**
(45) Veröffentlichungstag und Bekanntmachung des Hinweises auf die Patenterteilung: **31.03.2004**
(21) Anmeldenummer: 99900825.3
(22) Anmeldetag: 27.01.1999
(51) Int. Cl.: H02K 15/16, F04B 35/04

(54) **HERMETISCH GEKAPSELTER VERDICHTER**
HERMETICALLY ENCAPSULATED COMPRESSOR
COMPRESSEUR A ENCAPSULAGE HERMETIQUE

(30) Priorität: 28.01.1998 AT 13498
(43) Veröffentlichungstag der Anmeldung: 15.11.2000
(73) Patentinhaber: Verdichter OE. GesmbH, 8280 Fürstenfeld (AT)
(72) Erfinder: BRABEK, Walter, Burgenland (AT); HIRTZI, Josef, A-8271 Bad Waltersdorf (AT)
(74) Vertreter: KLIMENT & HENHAPEL
(86) Internationale Anmeldenummer: PCT/AT1999/000020
(87) Internationale Veröffentlichungsnummer: WO 1999/039425

(56) Entgegenhaltungen:
- WO-A-98/16000
- DE-A- 3 320 660
- GB-A- 2 005 925
- US-A- 3 320 660
- US-A- 5 201 640
- PATENT ABSTRACTS OF JAPAN vol. 007, no. 115 (E-176), 19. Mai 1983 & JP 58 033954 A (MATSUSHITA DENKI SANGYO KK), 28. Februar 1983

## Beschreibung

Die Erfindung bezieht sich auf einen hermetisch gekapselten Verdichter zur Verwendung in Kleinkälteanlagen gemäß Oberbegriff des Anspruch 1.

Derartige Verdichter bestehen aus einem Elektromotor, der eine Kurbelwelle antreibt. Diese ist über eine Pleuelstange mit einem das Kältemittel verdichtenden Kolben verbunden, die beide von einem Zylindergehäuse mit Fortsatz aufgenommen sind. Die Anordnung des Elektromotors erfolgt entweder oberhalb oder unterhalb des Zylindergehäuses samt Fortsatz. Ein wichtiges Erfordernis bei Verdichtern deren Elektromotor unterhalb des Zylindergehäuses samt Fortsatz angeordnet ist, ist die Einhaltung eines Sicherheitsabstandes zwischen den an einer Stirnfläche des Elektromotors angeordneten Auflagern, auf denen der Elektromotor und in weiterer Folge das Zylindergehäuse samt Fortsatz im Verdichtergehäuse lagern und einem an derselben Stirnfläche angeordneten Wickelkopf. Die Größe dieses Wickelkopfes ist nicht nur in Bezug auf den Sicherheitsabstand zu den. Auflagern bei jenen Verdichtern deren Elektromotor unterhalb des Zylindergehäuses samt Fortsatz angeordnet ist, sondern auch bei jenen Verdichtern, deren Elektromotor oberhalb des Zylindergehäuses samt Fortsatz angeordnet ist, ein entscheidendes Konstruktionsmerkmal hinsichtlich der Form und Größe des gesamten Verdichtergehäuses in diesem Bereich, sowie hinsichtlich der Menge des verwendeten Kupferdrahtes. In weiterer Folge steht wiederum die Größe und die Form des den Elektromotor und das Zylindergehäuse umfassenden Verdichtergehäuses solcher gekapselten Verdichter, in direktem Zusammenhang mit dem abgestrahlten Schall und'der Festigkeit dieses Gehäuses.

Bei Verdichtern in Kälteanlagen nach dem Stand der Technik kommen einphasige Asynchronmotoren als Elektromotor zum Einsatz. In einer zentralen Durchgangsbohrung des Rotors dieses Elektromotors ist eine Kurbelwelle fixiert, die mit ihrem einen Endbereich über die eine Stirnfläche des Rotors hinausragt und mit ihrem anderen Endbereich in einem Fortsatz des Zylindergehäuse gelagert ist, der anschließend an die andere Stirnfläche des Rotors angeordnet ist, wobei jener Teil des Fortsatzes des Zylindergehäuses, der das Lager für die Kurbelwelle bildet als zylindrische Buchse ausgebildet ist, die in eine ebenfalls zentrale Bohrung im Rotor des Elektromotors hineinragt. An jenem Endbereich der Kurbelwelle, der sich im Fortsatz des Zylindergehäuse befindet ist über ein Pleuellager eine Pleuelstange, sowie in weiterer Folge ein Kolben angesteuert. Die Kurbelwelle weist Bohrungen zur Ölversorgung des Lagers, sowie der übrigen Gleitflächen im Zylindergehäuse auf.

Am Stator des Elektromotors, der im eingebauten Zustand so angeordnet ist, daß die Drehachse des Rotationskörpers senkrecht steht, sind im Falle der Anordnung des Elektromotors unterhalb des Zylindergehäuses samt Fortsatz, an der dem Fortsatz abgewandten Stirnfläche Auflager vorzugsweise federnd angeordnet, die sich gegen das Verdichtergehäuse abstützen, und die während des Verdichtens auftretenden Stöße und Schwingungen ausgleichen. Die Auflager sind im allgemeinen als Spiralfedern ausgeführt, in die von unten ein am Verdichtergehäuse befestigter Stift eingreift und die an deren Oberseite in an der Stirnfläche des Stators angeordnete Befestigungsmittel eingreifen. Die Spiralfedern müssen so angeordnet sein, daß ein 'bestimmter Sicherheitsabstand zwischen ihnen und dem ebenfalls an dieser Stirnseite angeordneten Wickelkopf des Stators eingehalten werden kann. Bei einer Mehrzahl von Verdichtern nach dem Stand der Technik sind die Wicklungen in beiden Statorwickelköpfen im wesentlichen entlang Kreisbögen geführt, so daß sie im wesentlichen kreisförmig an der Stirnfläche des Stators angeordnet sind, wobei der innere Durchmesser des Stators, entspricht jenem Durchmesser des Rotors plus einem erforderlichen Luftspalt, von keinem Draht des Wickelkopfes nach innen überragt wird. Dies ist erforderlich, da ein Montierbehelfsmittel, von dem der Rotor zusammen mit der Kurbelwelle und dem Zylindergehäuse samt Fortsatz während der Montage geführt ist, durch den zylindrischen Hohlraum des Stators zur Fixierung der Position des Stators gegenüber dem Rotor und dem Fortsatz des Zylindergehäuses gezogen wird und somit die Einstellung des Luftspaltes erfolgt. Vor allem bei leistungsstärkeren Kältemittelverdichter kann die Einhaltung des Sicherheitsabstandes zwischen Auflager und Statorwickelkopf aufgrund dessen Größe und des Erfordernisses, daß der Innendurchmesser der Statorbohrung nicht von der Wicklung des Wickelkopfes überragt werden darf, nicht ohne zusätzliche Bauteile eingehalten werden. Es müssen daher zusätzliche Abstandsbleche an den Befestigungselementen an der dem Fortsatz des Zylindergehäuse abgewandten Stirnfläche des Stators angeordnet werden, welche die Auflager radial weiter von der Rotationsachse des Stators entfernen und somit die Einhaltung eines größeren Abstandes zwischen den Auflagern und dem Wickelkopf des Stators ermöglichen.

Im Falle der Anordnung des Elektromotors oberhalb des Zylindergehäuses samt Fortsatz, sind die Auflager an diesem angeordnet und stützen ihn und in weiterer Folge den Elektromotor gegen das Verdichtergehäuse ab.

Aufgrund der sehr hohen Produktionszahlen solcher Verdichter bedeuten diese zusätzlichen Bauelemente jedoch einen großen zusätzlichen Herstellungsaufwand. Auch muß das Verdichtergehäuse im Bereich der federnden Auflager weiter ausgebaucht werden, womit es wesentlich größer und auch schwerer wird. Die dadurch entstehenden größeren Gehäuseflächen begünstigen die Schallabstrahlung, wodurch der Verdichter im Betrieb lauter wird.

Weiters nimmt, wie schon erwähnt, mit zunehmender Kälteleistung die erforderliche Antriebsleistung des Elektromotors und damit die Menge an Kupfer zu.

Eine Minderheit der Verdichter nach dem Stand der Technik weist einen Wickelkopf auf, dessen Wicklungsdrähte entlang Kreissehnen des Rotorquerschnittes geführt sind (geschlossener Wickelkopf).

Durch diese spezielle Wicklungsart des Wickelkopfes erstreckt sich dieser in einem Stirnbereich des Stators über einen Großteil des lichten Durchmessers des Stators, benötigt deshalb weitaus weniger Platz als die herkömmliche konventionelle Art der Wicklung über den Umfang des Stators und schafft gegen den äußeren Durchmesser des Stators mehr Platz, womit dieser für die Auflager zur Verfügung steht und diese nicht mit Zusatzblechen radial weiter nach außen versetzt werden müssen. Es ist somit möglich, das Verdichtergehäuse im Bereich der Auflager des Elektromotors und des ebenfalls in diesem Bereich angeordneten Wickelkopfes schmäler zu bauen, wodurch sich sowohl das Gewicht als auch der Platzbedarf des Gehäuses reduziert. Auch reduziert sich die Höhe der Wand des Verdichtergehäuses, wodurch die Schallabstrahlungsfläche reduziert wird.

Bei dieser Art von Verdichtern nach dem Stand der Technik besteht jedoch das Problem, der Prüfung und Einstellung des Luftspaltes mittels Prüfgerät bzw. Montierbehelfsmittel. Solche Prüfgeräte bzw. Montierbehelfsmittel weisen im wesentlichen eine Dicke auf, die der Dicke des Luftspaltes entspricht. Diese Prüfung erfolgt bei bekannten Verdichtern mit geschlossenen Wickelköpfen immer von unten, also'von jener Seite des Stators, die dem Zylindergehäuse abgewandt ist.

Von dieser Seite ist der Luftspalt jedoch nur sehr schwer zugänglich, so daß eine Prüfung desselben nur an wenigen, ausgewählten Punkten möglich ist. Um eine exakte Prüfung des Luftspaltes zu ermöglichen, ist jedoch eine entsprechend hohe Winkelabdeckung des Umfanges des Luftspaltes erforderlich. Je enger die Wicklung des geschlossenen Wickelkopfes ausgeführt ist, desto schwieriger ist die Prüfung und Einstellung des Luftspaltes von. jener Seite des Stators, die dem Zylindergehäuse abgewandt ist.

Aus der US 5,201,640 ist es bekannt, den Zylinderblock mit Durchbrüchen zu versehen, um das Gewicht des Verdichters zu verringern.

Aus der US 3,320,660 ist ein Verfahren bekannt, um dynamoelektrische Maschinen zusammenzubauen, insbesondere den Rotor und den Stator gegeneinander auszurichten. Dabei werden Montagehilfsmittel zwischen Rotor und Stator eingesteckt.

Ziel der vorliegenden Erfindung ist es, bei einem hermetisch gekapselten Verdichter für Kleinkältemaschinen eine alternative Art der Einstellung und Prüfung des Luftspaltes vorzusehen, die es ermöglicht auch bei geschlossenem Wickelkopf eine exakte Justierung des Luftspaltes zu tätigen.

Diese Aufgabe wird bei einem Verdichter der eingangs erwähnten Art durch die kennzeichnenden Merkmale des Anspruchs 1 erreicht.

Dadurch kann die Prüfung und Einstellung des Luftspaltes von der Seite des Zylindergehäuses samt Fortsatz erfolgen, wobei eine genaue Positionierung der Kurbelwelle, des Zylindergehäuses samt Fortsatz, des Rotors und des Stators möglich ist. Weiters kann zur Prüfung und Einstellung des Luftspaltes ein im wesentlichen zylindrisches Montierbehelfsmittel verwendet werden, das einen Großteil des Umfanges des Luftspaltes abdeckt, somit eine hohe Winkelabdeckung erreicht.

Durch das Merkmal des Anspruches 2 kann auf einfache Art und Weise eine besonders exakte Positionierung des Montierbehelfsmittels im Zylindergehäuse samt Fortsatz und somit eine exakte Einstellung des Luftspaltes erreicht werden.

Ein weiteres Ziel der vorliegenden Anmeldung ist es, zwei Verfahren zum Zusammenbau und zur Positionierung eines den erfindungsgemäßen Wickelkopf aufweisenden Stators mit dem Rotor, der Kurbelwelle und dem Zylindergehäuse samt Fortsatz vorzusehen. Die herkömmlichen Verfahren, weiche den Zusammenbau über jene Stirnfläche des Stators vorsehen, an der die Auflager angeordnet sind, können bei einem Stator mit geschlossenem Wickelkopf 'nicht ausgeführt werden, da ein Einschieben des Rotors in die zentrische Statorbohrung durch die spezielle Ausbildung des Wickelkopfes verhindert wird.

Gemäß Anspruch 3 erfolgt daher die Montage des Stators mit dem Rotor, der Kurbelwelle und dem Zylindergehäuse samt Fortsatz über die dem Zylindergehäuse zugewandte Stirnfläche des Rotors mittels eines Montierbehelfsmittels bekannter Art, das nach Fixierung des Stators in seiner Position und Einstellung des Luftspaltes in umgekehrter Richtung wieder entfernt wird. Das erfindungsgemäße Verfahren ist erforderlich um einen Zusammenbau eines Verdichters mit einem geschlossenem Wickelkopf durchzuführen.

Im folgenden wird die Erfindung anhand eines in den Zeichnungen dargestellten Ausführungsbeispieles beschrieben.

Dabei zeigen:
- Fig. 1:: einen Schnitt durch einen erfindungsgemäßen Verdichter
- Fig. 2a:: eine Obersicht eines erfindungsgemäßen Verdichters
- Fig. 2b:: eine Untersicht eines erfindungsgemäßen Verdichters ohne Zylindergehäuse samt Fortsatz
- Fig. 3:: eine Ansicht eines erfindungsgemäßen Zylindergehäuses
- Fig. 4:: eine Schnittansicht der Position von Rotor, Verdichter, Kurbelwelle und Zylindergehäuse bei der Anwendung des erfindungesgemäßen Verfahrens zum Zusammenbau des Verdichters

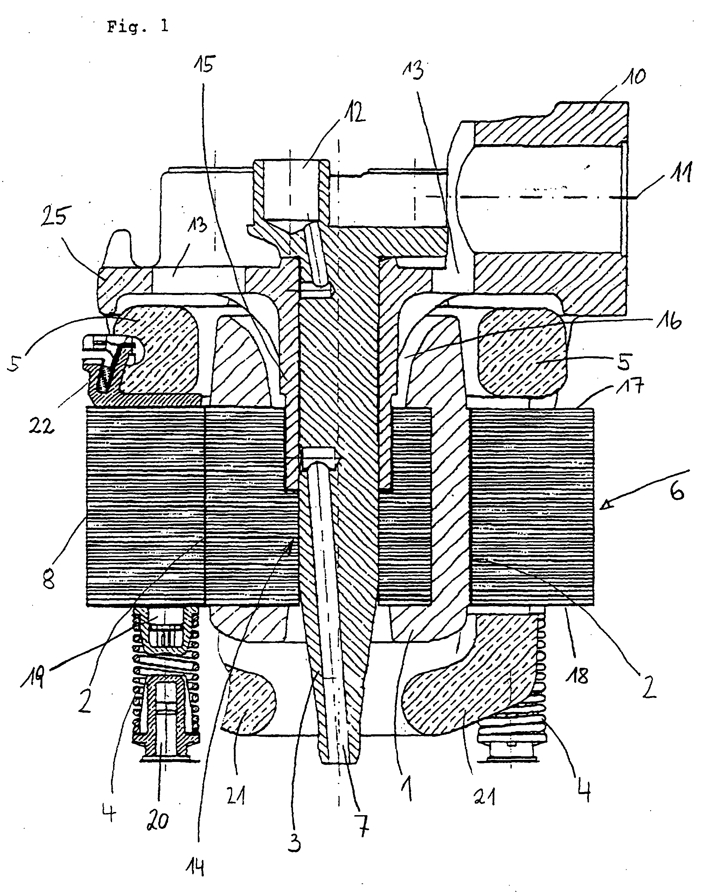

Fig. 1 zeigt einen Schnitt durch einen erfindungsgemäßen Verdichter. In einem Durchbrüche 13 aufweisenden Fortsatz 25 des Zylindergehäuses 10 ist eine Kurbelwelle 3 senkrecht zur Zylinderachse 11 gelagert, wobei die Lagerstelle 15 des Fortsatzes 25 in eine zentrische Bohrung 16 eines Rotors 1 eines Elektromotors 6 hineinragt. Am oberen Ende der Kurbelwelle 3 ist ein Pleuellager 12 angeordnet, über das ein Pleuel (nicht dargestellt) und in weiterer Folge ein Kolben (nicht dargestellt) angetrieben wird. Die Kurbelwelle 3 weist eine Schmierölbohrung 7 auf und ist im Bereich 14 am Rotor 1 fixiert. Ein Stator 8 umgibt, durch einen Luftspalt 2 getrennt, den Rotor 1. An der dem Zylindergehäuse zugewandten Stirnfläche 17 des Stators 8 ist ein Wickelkopf 5 angeordnet, der im wesentlichen entlang des Umfanges des Stators 8 geführt ist und dessen Stromanschluß über ein Klemmboard 22. erfolgt. An der dem Fortsatz 25 des Zylindergehäuses 10 abgewandten Stirnfläche 18 des Stators 8 sind der geschlossene Wickelkopf 21 sowie Befestigungsvorrichtungen 19 angeordnet, die in Druckfederelemente 4 eingreifen, welche wiederum in am Boden des Verdichtergehäuses angeordnete Stifte 20 eingreifen.

Bei Anordnung des Elektromotors oberhalb des Zylindergehäuses samt Fortsatz sind die Auflager entsprechend an diesem angeordnet. Zur Vorstellung dieser Anordnung kann die Fig. 1 um 180° verdreht werden und die Auflager um eine horizontale Gerade an die nach unten weisende Oberseite des Zylindergehäuses samt Fortsatz gespiegelt werden.

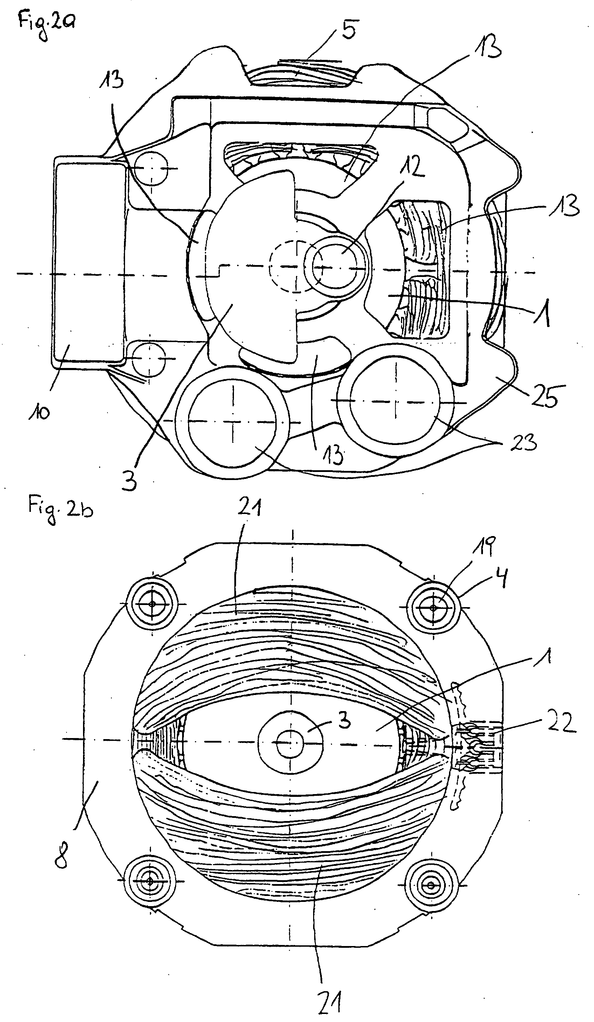

Fig. 2a und 2b zeigen eine Ober- und Unteransicht eines erfindungsgemäßen Verdichters, wobei bei der Unteransicht das Zylindergehäuse samt Fortsatz nicht dargestellt ist. Sehr deutlich sind hier die Durchbrüche 13 zum Durchstecken des Montierbehelfsmittel 24 zu erkennen, sowie Druckschallkammern 23 und die spezielle Ausbildung des Statorwicklungskopfes 21. Um eine exakte Einstellung des Luftspaltes zu gewährleisten, ist es von Vorteil, daß die, die Durchbrüche 13 unterbrechende Stege nicht mehr als 20 Grad des Umfanges des Luftspaltes verdecken.

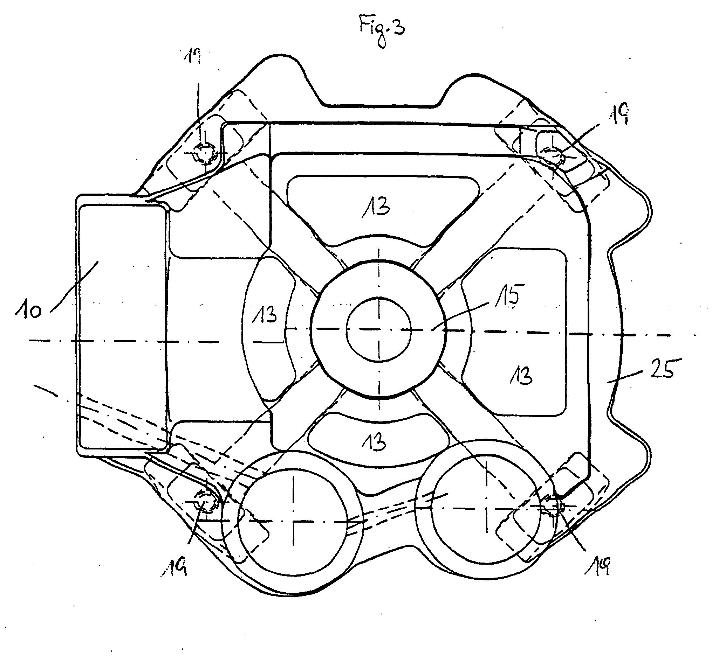

Fig. 3 zeigt eine Obersicht eines erfindungsgemäßen Zylindergehäuses 10. Um die zentral angeordnete Lagerstelle 15 der Kurbelwelle sind die Durchbrüche 13 konzentrisch angeordnet.

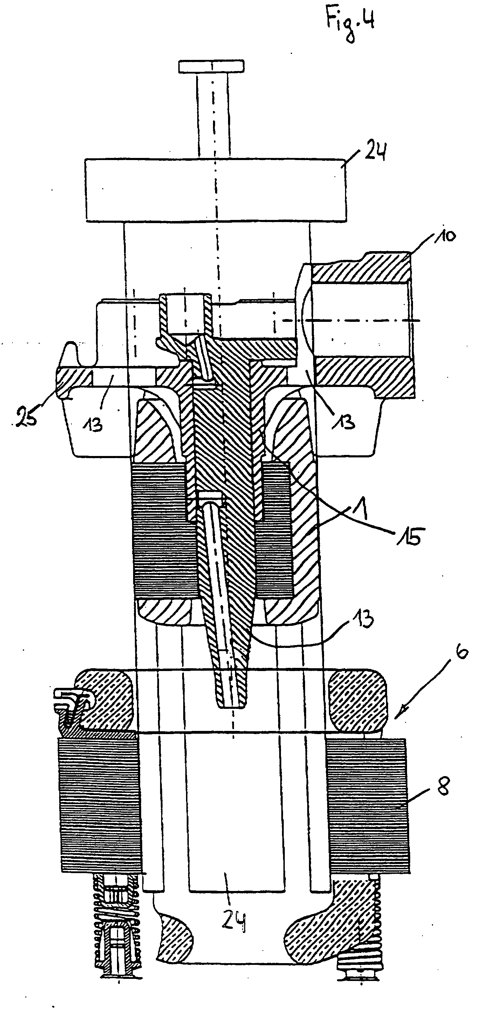

Fig. 4 zeigt die Positionierung der einzelnen Komponenten bei einem ersten erfindungsgemäßen Verfahren zur Montage. Der Rotor 1 ist an der Kurbelwelle 3 fixiert, wobei diese in Ihrer Lagerung 15 im Fortsatz 25 gelagert ist. Durch die Durchbrüche 13 im Fortsatz 25 ist ein Montierbehelfsmittel 24 gesteckt, das gleichzeitig den Rotor 1 eng umschließt. Der zylindrische Mantel des Montierbehelfsmittel 24 ist in seinem unteren Ende in die zentrische Statorbohrung gesteckt, so daß nach dem Hinunterschieben des Rotors 1, gemeinsam mit der Kurbelwelle 3 und dem Zylindergehäuse 10 samt Fortsatz 25, der Rotor 1 in der Statorbohrung zentriert ist und der Stator 8 mit dem Zylindergehäuse 10 nach bekannter Art fixiert werden kann.

## Patentansprüche

1. Hermetisch gekapselter Verdichter zur Verwendung in Kleinkälteanlagen mit einem Verdichtergehäuse in dem ein einen Fortsatz (25) aufweisendes Zylindergehäuse (10) und ein Elektromotor (6) aneinander befestigt angeordnet sind, wobei das Zylindergehäuse (10) samt Fortsatz (25) einen Kolben und eine Pleuelstange aufnimmt und die Pleuelstange mit einer Kurbelwelle (3) verbunden ist, die im Fortsatz (25) des Zylindergehäuses (10) gelagert ist und der aus dem Fortsatz (25) des Zylindergehäuses (10) ragende Abschnitt der Kurbelwelle (3) in einem Bereich in einer zentralen Bohrung im Rotor (1) des Elektromotors (6) fixiert ist, dessen Stator (8) in seinen Stirnbereichen angeordnete Statorwickelköpfe (5, 21) aufweist wobei zusätzlich wahlweise an der dem Fortsatz (25) des Zylindergehäuses (10) abgewandten Stirnfläche des Stators (8) oder am Zylindergehäuse (10) samt Fortsatz (25) Auflager (4,20,19) zur vorzugsweise federnden Abstützung des Elektromotors (6) am Verdichtergehäuse angeordnet sind und wobei die Wicklungsdrähte des Statorwicklungskopfes (21) an der dem Fortsatz (25) des Zylindergehäuses (10) abgewandten Stirnfläche des Stators (8) im wesentlichen entlang Kreissehnen des Rotorquerschnittes geführt sind und der kleinste lichte Abstand der Wicklung dieses Statorwicklungskopfes (21) kleiner ist,' als der Außendurchmesser des Rotors (1), **dadurch gekennzeichnet, dass** der Fortsatz (25) des Zylindergehäuses (10) entlang eines Kreises angeordnete Durchbrüche (13) aufweist, die radial im Bereich. des Luftspaltes zwischen Stator (8) und Rotor (1) angeordnet sind und durch die der zylindrische Mantel eines Montierbehelfsmittels (24) zum Zusammenbau und zur Positionierung der Kurbelwelle (3), des Zylindergehäuses (10) und des Rotors (1) mit dem Stator (8) durchsteckbar ist wobei die Durchbrüche (13) durch Stege voneinander getrennt sind, die jeweils nicht mehr als 20° des Umfangs des Kreises abdecken.

2. Hermetisch gekapselter Verdichter nach Anspruch 1, **dadurch gekennzeichnet, dass** eine Kante eines Durchbruchs (13) das Zylindergehäuse (10) abschließt und im wesentlichen die gedachte Verlängerung eines Teiles des Luftspaltes zwischen Rotor (1) und Stator (8) bildet.

3. Verfahren zum Zusammenbau eines hermetisch gekapselten Verdichters nach einem der Ansprüche 1 und 2, insbesondere des Elektromotors (6) mit der Kurbelwelle (3) und dem Zylinderdeckel (10) samt Fortsatz (25.) des Verdichters, das folgende Schritte aufweist
- Einführen der Kurbelwelle (3) in ihre'Lagerung (15) im Fortsatz (25) des Zylindergehäuses (10)
- Fixieren des Rotors (1) des Elektromotors (6) an einem Teil jenes Bereiches der Kurbelwelle (3), der aus dem Fortsatz (25) herausragt
- Einlegen eines dem Luftspalt des Elektromotors entsprechenden Teils (24) in die zentrische Statorbohrung
- Einbringen des Rotors in seine erforderliche Position in der zentrischen Bohrung im Stator (8)
- Fixieren des Stators (8) gegenüber dem Zylindergehäuse (10) samt Fortsatz (25) Entfernen des dem Luftspalt entsprechenden Teils (24),
**dadurch gekennzeichnet, daß** der dem Luftspalt entsprechende Teil (24) über den Weg jener Stirnseite (17) des Stators (8), die dem Fortsatz (25) zugewandt ist und über die dafür vorgesehenen Öffnungen (13) im Fortsatz (25) in die zentrische Statorbohrung gesteckt wird, wobei die Kurbelwelle bereits in ihrer Lagerung im Fortsatz (25) steckt und der Rotor (1).an seiner Position an der Kurbelwelle fixiert ist und nach Positionierung des Rotors (1) an seinem erforderlichen Platz in der. Statorbohrung die Fixierung des Stators (8) gegenüber dem Fortsatz (25) und dem Zylindergehäuse (10) erfolgt, wobei der dem Luftspalt entsprechende Teil (24) wieder in die umgekehrte Richtung 'entfernt wird, in die er eingesetzt wurde.

## Claims

1. A hermetically encapsulated compressor for use in household refrigerating machines with a compressor housing in which a cylinder housing (10) which comprises an extension (25) and an electric motor (6) are arranged which are fastened to each other, with the cylinder housing (10) plus extension (25) receiving a piston and a connecting rod and with the connecting rod being connected with a crankshaft (3) which is held in the extension (25) of the cylinder housing (10), and the section of the crankshaft (3) which projects from the extension (25) of the cylinder housing (10) is fixed in a region in a central bore in the rotor (1) of the electric motor (6) whose stator (8) is provided in its face regions with stator end windings (5, 21), with supports (4, 20, 19) for the purpose of preferably resiliently supporting the electric motor (6) on the compressor housing being arranged additionally in an optional fashion on the face side of the stator (9) averted from the extension (25) of the cylinder housing (10) or on the cylinder housing (10) plus extension (25), and with the wires of the stator end winding (21) being guided substantially along the chords of the rotor cross section on the face surface of the stator (8) which is averted from the extension (25) of the cylinder housing (10), and with the smallest clear distance of the winding of said stator end winding (21) being smaller than the outside diameter of the rotor (1), **characterized in that** the extension (25) of the cylinder housing (10) comprises breakthroughs (13) arranged along a circle, which breakthroughs are arranged radially in the region of the air gap between stator (8) and rotor (1) and through which the cylindrical jacket of a mounting tool (24) can be inserted for the assembly and positioning of the crankshaft (3), the cylinder housing (10) and the rotor (1) with the stator (8), with the breakthroughs (13) being mutually separated by means of webs which each do not cover more than 20° of the circumference of the circle.

2. A hermetically encapsulated compressor as claimed in claim 1, **characterized in that** one edge of a breakthrough (13) seals the cylinder housing (10) and substantially forms the imaginary extension of a part of the air gap between rotor (1) and stator (8).

3. A method for the assembly of a hermetically encapsulated compressor as claimed in one of the claims 1 and 2, especially the electric motor (6) with the crankshaft (3) and the cylinder cover (10) plus extension (25) of the compressor, comprising the following steps:
- introduction of the crankshaft (3) into its bearing (15) in the extension (25) of the cylinder housing (10);
- fixing of the rotor (1) of the electric motor (6) on a part of the region of the crankshaft (3) which projects out of the extension (25);
- insertion into the centric stator bore of a part (24) corresponding to the air gap of the electric motor;
- introduction of the rotor into its required position in the centric bore in the stator (8);
- fixing of the stator (8) relative to the cylinder housing (10) plus extension (25);
- removal of the part (24) corresponding to the air gap; **characterized in that** the part (24) corresponding to the air gap is inserted into the centric stator bore via the face side (17) of the stator (8) which faces the extension (25) and via the openings (13) in the extension (25) provided for this purpose, with the crankshaft already having been inserted in its bearing in the extension (25) and the rotor (1) already being fixed in its position on the crankshaft and with the fixing of the stator (8) relative to the extension (25) and the cylinder housing (10) occurring after the positioning of the rotor (1) at its required place in the stator bore, with the part (24) corresponding to the air gap being removed again in the reverse direction in which it was originally inserted.

## Revendications

1. Compresseur hermétique destiné à être utilisé dans de petites installations frigorifiques avec une carcasse de compresseur dans laquelle sont disposés un boîtier de cylindre (10) comportant un prolongement (25) et un moteur électrique (6) assujettis l'un à l'autre, le boîtier de cylindre (10) avec son prolongement (25) accueillant un piston et une bielle, la bielle étant reliée à un vilebrequin (3) qui repose dans le prolongement (25) du boîtier de cylindre (10), la partie de vilebrequin (3) faisant saillie hors du prolongement (25) du boîtier de cylindre (10) étant fixée à un endroit dans un alésage central ménagé dans le rotor (1) du moteur électrique (6) dont le stator (8) comporte des têtes de bobines statoriques (5, 21) disposées dans ses zones d'extrémité, des appuis (4, 20, 19) sur lesquels prend appui, de manière élastique de préférence, le moteur électrique (6) vers la carcasse du compresseur, étant de plus disposés optionnellement soit sur la face d'extrémité du stator (8) détournée du prolongement (25) du boîtier de cylindre (10), soit sur le boîtier de cylindre (10) muni de son prolongement (25), les fils de la tête de bobine statorique (21), sur la face d'extrémité du stator (8) détournée du prolongement (25) du boîtier de cylindre (10), étant guidés sensiblement le long de cordes du cercle formé par la section du rotor et le plus petit écartement intérieur de la bobine de cette tête de bobine statorique (21) étant inférieur au diamètre extérieur du rotor (1), **caractérisé en ce que** le prolongement (25) du boîtier de cylindre (10) comporte des ouvertures (13) pratiquées sur un cercle de manière à être agencées radialement à la hauteur de l'entrefer entre stator (8) et rotor (1), ces ouvertures (13) étant traversées par l'enveloppe cylindrique d'un expédient de montage (24) servant à l'assemblage et au positionnement du vilebrequin (3), du boîtier de cylindre (10) et du rotor (1) sur le stator (8) et étant séparées les unes des autres par des méplats ne couvrant chacun pas plus de 20° de la circonférence du cercle.

2. Compresseur hermétique selon la revendication 1, **caractérisé en ce qu'**un bord d'une ouverture (13) ferme le boîtier de cylindre (10) et forme sensiblement le prolongement imaginaire d'une partie de l'entrefer entre rotor (1) et stator (8).

3. Procédé d'assemblage d'un compresseur hermétique selon l'une quelconque des revendications 1 et 2, notamment du moteur électrique (6), du vilebrequin (3) et du boîtier de cylindre (10) avec son prolongement (25) du compresseur, comportant les étapes suivantes :
- introduire le vilebrequin (3) dans son logement (15) prévu dans le prolongement (25) du boîtier de cylindre (10)
- fixer le rotor (1) du moteur électrique (6) sur un segment de la partie de vilebrequin (3) faisant saillie hors du prolongement (25)
- placer dans l'alésage central du stator une pièce (24) correspondant à l'entrefer du moteur électrique
- positionner le rotor à l'endroit requis dans l'alésage central du stator (8)
- fixer le stator (8) par rapport au boîtier de cylindre (10) avec son prolongement (25)
- retirer la pièce (24) correspondant à l'entrefer,
**caractérisé en ce que**, après avoir traversé la face d'extrémité (17) du stator (8) tournée vers le prolongement (25) et les ouvertures (13) pratiquées à cet effet dans le prolongement (25), la pièce (24) correspondant à l'entrefer est introduite dans l'alésage central du stator, le vilebrequin reposant déjà dans son logement pratiqué dans le prolongement (25) et le rotor (1) étant déjà fixé en position sur le vilebrequin, le stator (8) étant fixé par rapport au prolongement (25) et au boîtier de cylindre (10) une fois que le rotor (1) est positionné à l'endroit requis dans l'alésage du stator, la pièce (24) correspondant à l'entrefer étant retirée dans le sens inverse de son introduction.
